(19) Europäisches Patentamt
European Patent Office
Office européen des brevets

(11) **EP 4 465 212 A1**

(12) **EUROPEAN PATENT APPLICATION**
published in accordance with Art. 153(4) EPC

(43) Date of publication:
**20.11.2024 Bulletin 2024/47**

(21) Application number: **22920253.6**

(22) Date of filing: **14.01.2022**

(51) International Patent Classification (IPC):
**G06N 10/00** (2022.01)

(52) Cooperative Patent Classification (CPC):
**G06N 10/00**

(86) International application number:
**PCT/JP2022/001056**

(87) International publication number:
**WO 2023/135728 (20.07.2023 Gazette 2023/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Hitachi, Ltd.**
**Tokyo 100-8280 (JP)**

(72) Inventor: **TOMARU Tatsuya**
**Tokyo 100-8280 (JP)**

(74) Representative: **Mewburn Ellis LLP**
**Aurora Building**
**Counterslip**
**Bristol BS1 6BX (GB)**

(54) **QUANTUM COMPUTER AND QUANTUM COMPUTER CONTROL METHOD**

(57) A quantum computer including: a qubit unit that maintains and computes quantum information in which a plurality of qubits is arrayed; a measurement unit that measures a result computed with the qubit unit; and a control unit that controls the qubit unit and the measurement unit, in which the control unit controls the qubit unit such that probabilities with which each of the qubits stays at 10> and |1> are made 1:1 on average during the computation in the qubit unit.

## FIG. 5

EP 4 465 212 A1

**Description**

Technical Field

The present invention relates to a quantum computer and a method for controlling a quantum computer.

Background Art

In the IT society, a demand for computer performance is not limited, and there is a high expectation for a quantum computer that can meet the demand. A qubit, which is a basic component of a quantum computer, is not a classical bit which can only take either |0> or |1>; it can be in a linear superposition state of |0> and |1>, i.e., a|0>+b|1>; in other words, it can be in two states at once. In a case where n qubits are present, $2^n$ states can be taken at once, and thus massively parallel computing can be implemented.

In this case, a and b are any complex numbers that meet $|a|^2+|b|^2=1$, and it is assumed that a and b are accurately maintained in computation. However, since noise is present in an environment, bit flip and phase flip occur probabilistically. These errors need to be corrected in the quantum computer to operate appropriately. Thus, quantum error correction has been devised, but the overhead is large and there is no prospect of implementing a so-called fault-tolerant quantum computer.

Therefore, a concept that has been attracting attention in recent years is a noisy intermediate-scale quantum (NISQ) computer. This is to operate a medium-sized quantum computer (the number of qubits is approximately 50 to several hundred) without error correction. It has been proven that the NISQ computer can perform processing faster than classical computers (quantum supremacy). However, what was demonstrated was that the generation of a random number through quantum interference, which was special as a problem and did not solve a real-world issue. That is, an algorithm for solving the real-world issue using the NISQ computer is an unsolved problem.

Many of problems expected to be able to be solved by quantum computers are to obtain the ground state. Representative examples are quantum chemistry (drug discovery), quantum many-body problems, and combinatorial optimization problems. In addition, finance has a ground state search type problem. The ground state can be obtained by starting from a known state through an adiabatic process. This method is called adiabatic state preparation (ASP) (see Nonpatent Literature 1) and is widely used for quantum computing and others. In a physical system, longitudinal relaxation inevitably exists, and the ground state is the transition destination of the longitudinal relaxation, thus the ASP is robust against the longitudinal relaxation (see Nonpatent Literature 2).

Citation List

Nonpatent Literature

Nonpatent Literature 1: A.Aspuru-Guzik, A.D.Dutoi, P.J.Love, M.Head-Gordon1, "SimulatedQuantum Computation of Molecular Energies," Science 309, 1704(2005).
Nonpatent Literature 2: A.M.Childs, E.Farhi, and J.Preskill, "Robustness of adiabatic quantum computation," Phys.Rev.A65, 012322(2002).

Summary of Invention

Technical Problem

There is a method called quantum annealing (QA) as a type of quantum computing. This is to restrict a problem Hamiltonian into an Ising spin type (restrict it into combinatorial optimization problem) and execute the ASP. QA is also called adiabatic quantum computation (AQC). QA has a high degree of maturity, but it is limited to an Ising spin Hamiltonian and thus lacks versatility.

Therefore, it is considered that ASP is executed by a so-called gate type quantum computer. However, in many gate type quantum computers, there is an energy difference between 10> and |1>, and in a case where there is longitudinal relaxation, the state relaxes to |0> or |1>, and it does not relax to the ground state of the problem Hamiltonian. That is, the property that ASP is robust against longitudinal relaxation disappears, and ASP is not able to be used as the principle of problem solving.

Therefore, an object of the present invention is to implement a gate type quantum computer that is robust against longitudinal relaxation even in a case where there is an energy difference between |0> and |1>.

Solution to Problem

A quantum computer according to an aspect of the present invention includes a qubit unit that maintains and computes quantum information in which a plurality of qubits is arrayed, a measurement unit that measures a result computed with the qubit unit, and a control unit that controls the qubit unit and the measurement unit. The control unit controls the qubit unit such that probabilities with which each of the qubits stays at $|0\rangle$ and $|1\rangle$ are made 1:1 on average during the computation in the qubit unit. Advantageous Effects of Invention

According to an aspect of the present invention, even in a case where there is an energy difference between $|0\rangle$ and $|1\rangle$, it is possible to implement a gate type quantum computer that is robust against longitudinal relaxation. Brief Description of Drawings

[FIG. 1] FIG. 1 is a diagram illustrating a principle of relaxation quantum computing.
[FIG. 2] FIG. 2 is an example of a circuit diagram for the relaxation quantum computing.
[FIG. 3] FIG. 3 is a diagram illustrating a longitudinal relaxation of a Bloch vector under an x-axis rotational gate operation.
[FIG. 4A1] FIG. 4A1 illustrates a $J\sigma_i\sigma_i$ type two-qubit gate on the left side; bit flips (X gates) are added before and after the two-qubit gate on the right side.

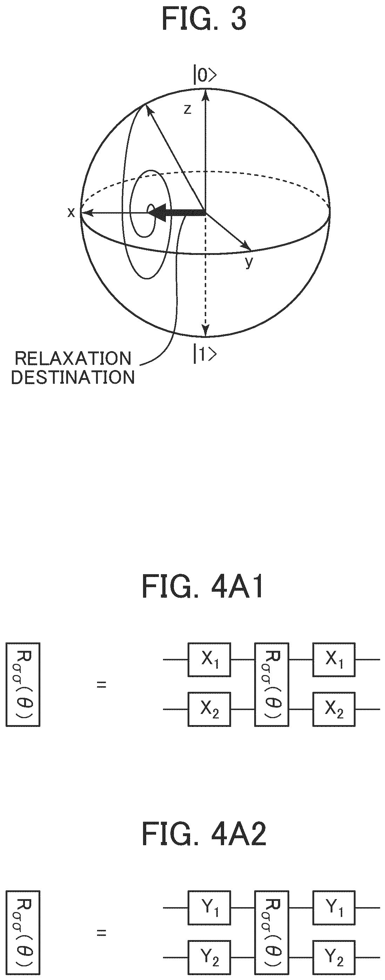

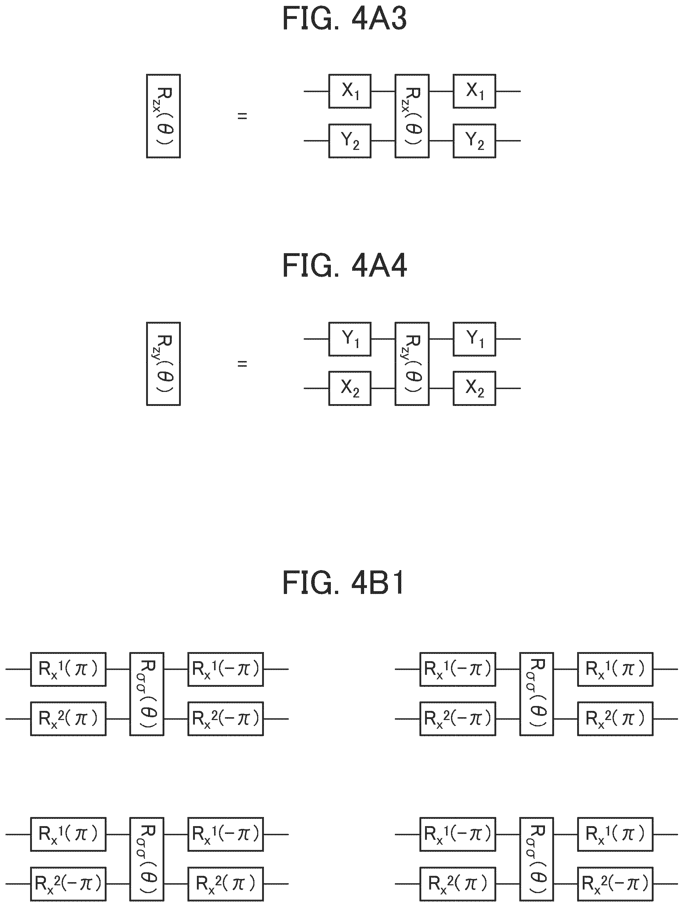

[FIG. 4A2] FIG. 4A2 illustrates a $J\sigma_i\sigma_i$ type two-qubit gate on the left side; "bit and phase flips" (Y gates) are added before and after the two-qubit gate on the right side.
[FIG. 4A3] FIG. 4A3 illustrates a $J\sigma_z\sigma_x$ type two-qubit gate on the left side; an X gate and a Y gate are added before and after the two-qubit gate on the right side.
[FIG. 4A4] FIG. 4A4 illustrates a $J\sigma_z\sigma_y$ type two-qubit gate on the left side; a Y gate and an X gate are added before and after the two-qubit gate on the right side.

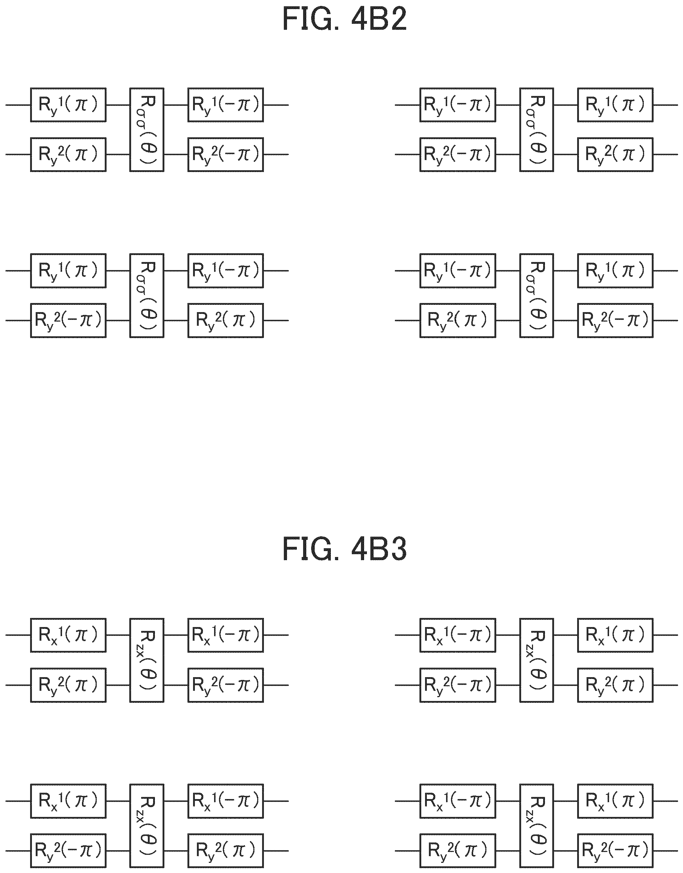

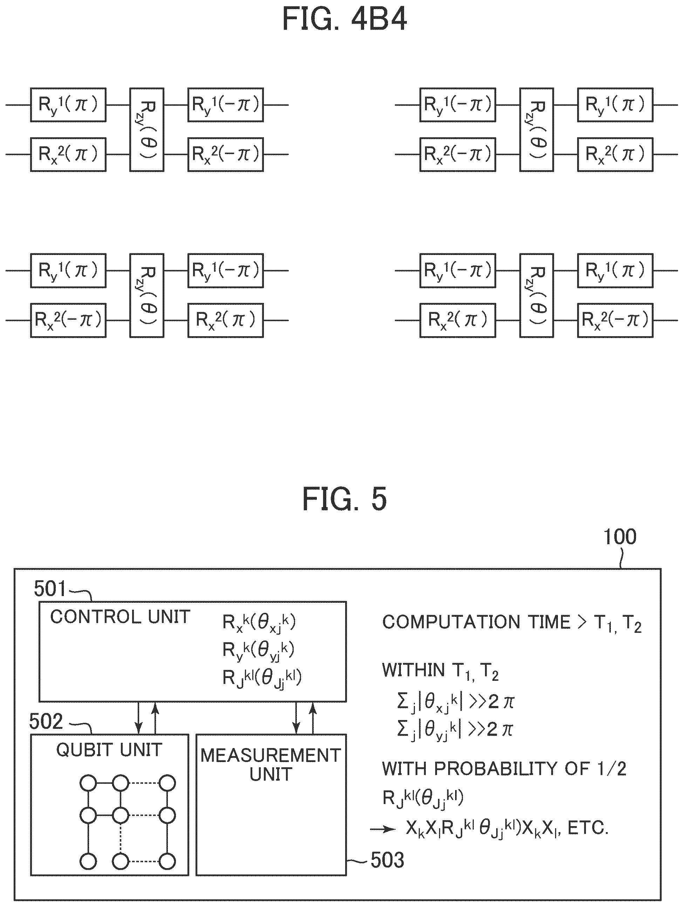

[FIG. 4B1] FIG. 4B1 illustrates examples of a circuit that implements the right side of FIG. 4A1.
[FIG. 4B2] FIG. 4B2 illustrates examples of a circuit that implements the right side of FIG. 4A2.
[FIG. 4B3] FIG. 4B3 illustrates examples of a circuit that implements the right side of FIG. 4A3.
[FIG. 4B4] FIG. 4B4 illustrates examples of a circuit that implements the right side of FIG. 4A4.
[FIG. 5] FIG. 5 is a diagram summarizing a configuration according to the present invention.

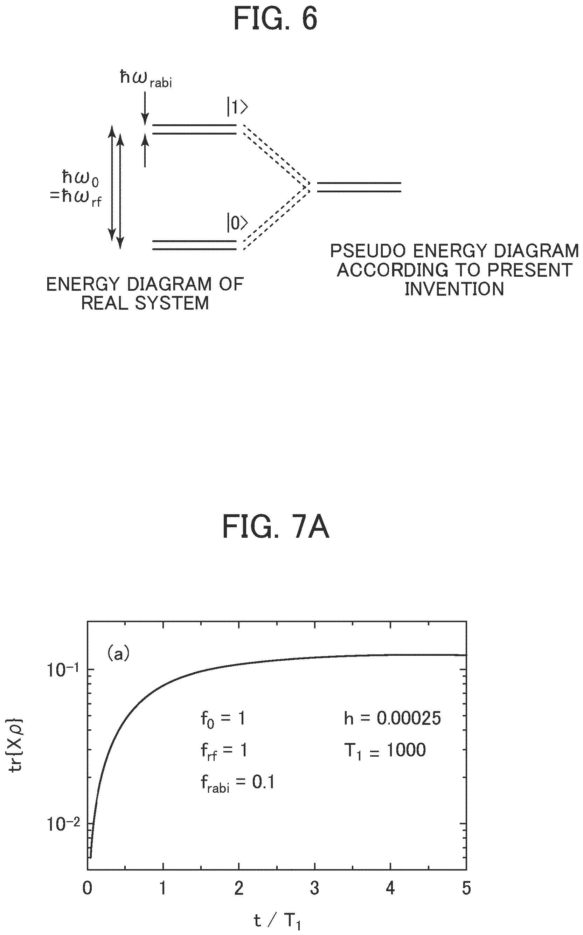

[FIG. 6] FIG. 6 is a diagram summarizing the present invention from the perspective of an energy diagram.
[FIG. 7A] FIG. 7A is a diagram illustrating a result where a relaxation was simulated under an x-axis rotational gate operation.

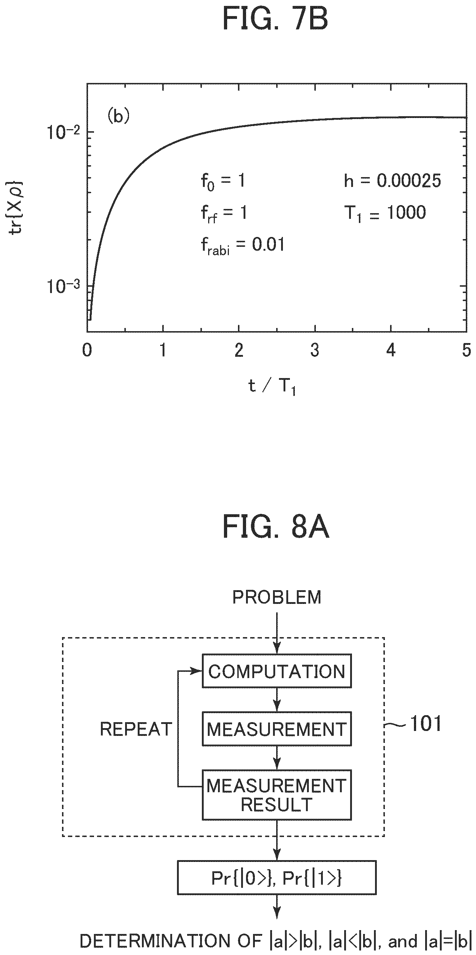

[FIG. 7B] FIG. 7B is a diagram illustrating a result where a relaxation was simulated under an x-axis rotational gate operation.
[FIG. 8A] FIG. 8A is a diagram illustrating an example of a procedure according to the present invention.

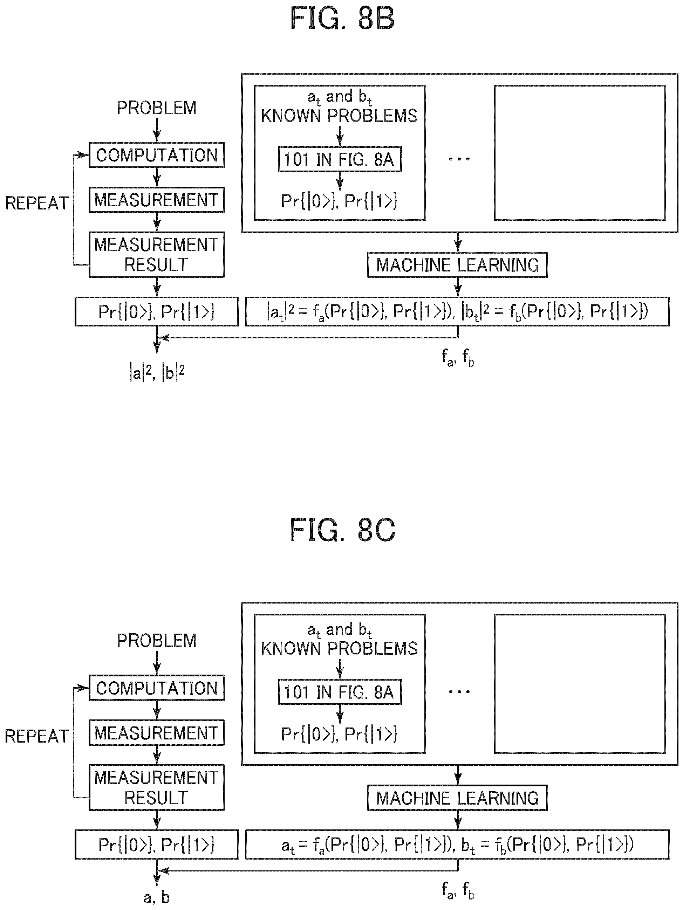

[FIG. 8B] FIG. 8B is a diagram illustrating another example of a procedure according to the present invention.
[FIG. 8C] FIG. 8C is a diagram illustrating still another example of a procedure according to the present invention.

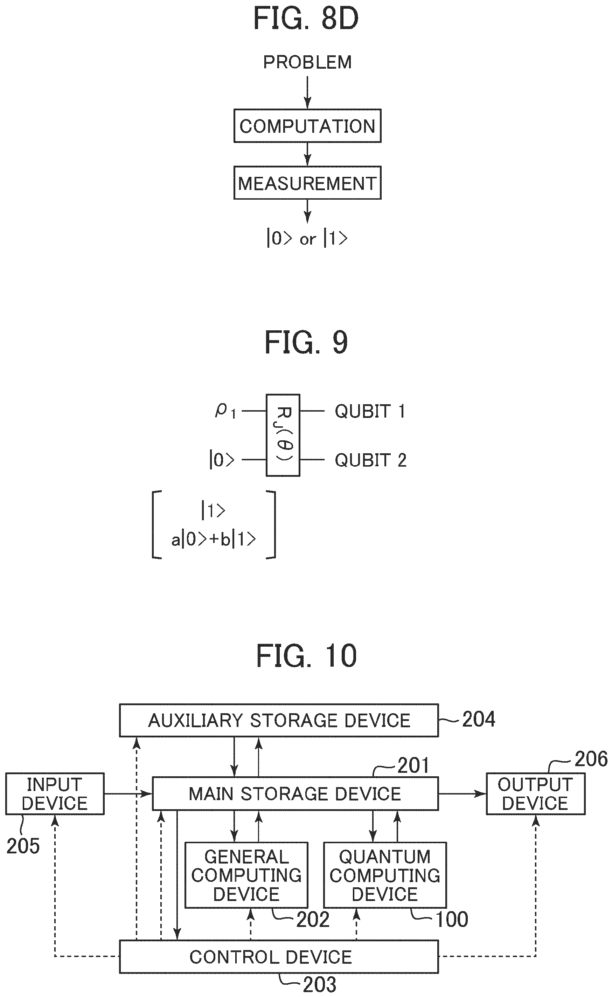

[FIG. 8D] FIG. 8D is a diagram illustrating still another example of a procedure according to the present invention.
[FIG. 9] FIG. 9 is a diagram illustrating an example in which quantum entanglement is formed with a two-qubit gate.
[FIG. 10] FIG. 10 is a diagram illustrating an overall computer system including a quantum computing device. Description of Embodiments

Hereinafter, embodiments will be described with reference to the drawings.

First Embodiment

Longitudinal relaxation is a phenomenon in which a state spontaneously decays from a high-energy state to a low-energy state, and is unavoidable in a physical system. Using longitudinal relaxation as a driving force for quantum computing is considered (relaxation quantum computing). Although it has been mentioned that ASP is robust against longitudinal relaxation, the present invention more actively uses longitudinal relaxation.

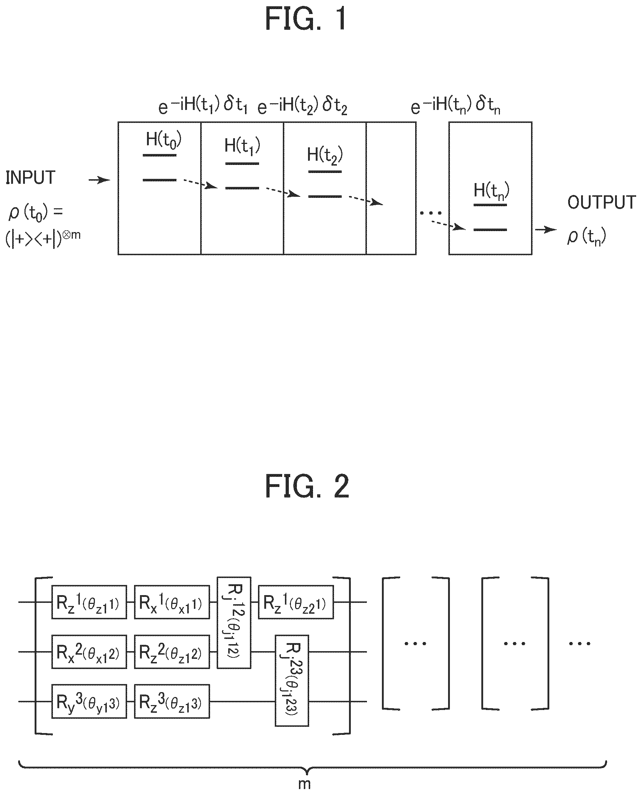

In a first embodiment, the concept of relaxation quantum computing is described first. FIG. 1 is a conceptual diagram of the relaxation quantum computing.

A problem Hamiltonian is represented by $H_p$. A challenge is to obtain the ground state of $H_p$. When an attempt is made to reach the ground state of $H_p$ by simply causing longitudinal relaxation, the state often falls into a local minimum energy state of $H_p$ and it is difficult to obtain the true ground state. Therefore, at $t=t_0$, the Hamiltonian is set to a Hamiltonian $H_d$ that ensures that the ground state is obtained, and then the Hamiltonian is gradually changed to reach $H_p$ at $t=t_n$. In this case, a state to which the state changes is limited to a state close to the ground state, thereby avoiding falling into the local minimum energy state.

Spin is modeled as a qubit. Let us consider a state in which there is no interaction between qubits under a transverse magnetic field; the state is given as the ground state of $H_d$. In this case, it can be written as $H_a=-B\Sigma_k X_k$. The subscript k distinguishes qubits, $X_k$ is an x component of a Pauli spin matrix (similarly, $Y_k$ and $Z_k$ are a y component and a z component of the Pauli spin matrices respectively), and B is a coefficient representing transverse magnetic field strength. The Hamiltonian in a period from $t=t_0$ to $t=t_n$ is set to $H(t_j)=s(t_j)H_p+[1-s(t_j)]H_d$ using a parameter $s(t)$. While $s(t_0)=0$ and $s(t_n)=1$, $s(t)$ is gradually changed in the period from $t=t_0$ to $t=t_n$.

The Hamiltonian and the parameter $s(t)$ are changed at a cycle of time $\delta t$ ($t_j=t_0+j\delta t$, j=0, 1, ···, n), and it is relaxed to the ground state at the cycle of time $\delta t$. For this reason, $\delta t>T_1$ and $\delta t>T_2$ should be satisfied. $\rho(t)$ in FIG. 1 represents a density matrix.

In the first embodiment, a gate type quantum computing is assumed. A gate corresponding to $H(t_j)$ is continuously applied during $\delta t$ in order to relax the state to the ground state of $H(t_j)$. The gate corresponding to $H(t_j)$ being continuously applied means that a unitary gate of (Equation 1) is continuously applied onto the system.

Equation 1

$$U = \exp\left[-iH(t_j)\,\delta t/\hbar\right] \qquad \text{(Equation 1)}$$

The gate operation is implemented by a combination of an x-axis (y-axis) rotation and gates such as CNOT. Let the Hamiltonian of a gate operation be $H_k$(k=1, 2, ...); let $H(t_j)=\Sigma_k a_k(t_j)H_k$. In this case, by the Trotter formula, (Equation 2) is satisfied for a sufficiently large integer m; then, the original operation is transformed into successive unitary gates (Equation 3) determined by the Hamiltonian $H_k$.

Equation 2

$$\exp\left[-i\left(\Sigma_k a_k H_k\right)\,\delta t/\hbar\right] = \left[\Pi_k \exp\left(-i a_k H_k \delta t/\hbar m\right)\right]^m \qquad \text{(Equation 2)}$$

Equation 3

$$U_k = \exp\left(-i a_k H_k \delta t/\hbar m\right) \qquad \text{(Equation 3)}$$

In addition, this operation is repeated as can be understood from $[\cdot]^m$. When $H_k=X_k$, $U_k$ represents an x-axis rotational gate. When $H_k=Y_k$, $U_k$ represents a y-axis rotational gate. When $H_k=Z_k$, $U_k$ represents a z-axis rotational gate. Similarly, in the case of an interaction between two qubits, such as $H_k=JZ_1Z_2$, $U_k$ is a two-qubit gate corresponding to the interaction. In this case, J is a coefficient representing the strength of the interaction. A gate time applied is determined by (Equation 4).

Equation 4

$$\theta = a_k\,\delta t/\hbar m \qquad \text{(Equation 4)}$$

FIG. 2 illustrates an example of a circuit for a Hamiltonian with a three-qubit system.

In FIG. 2, on a qubit 1 in the first row, a z-axis rotational gate, an x-axis rotational gate, an interaction gate with a qubit 2, and a z-axis rotational gate are applied. Similarly, an x-axis rotational gate, a z-axis rotational gate, the interaction gate with the qubit 1, and an interaction gate with a qubit 3 are applied on the qubit 2 in the second row. A y-axis rotational gate, a z-axis rotational gate, and the interaction gate with the qubit 2 are applied on the qubit 3 in the third row. This $[\cdot]$ is repeated by m times.

Second Embodiment

In the first embodiment, the procedure for giving the problem Hamiltonian $H_p$ and guiding the system to the ground state of $H_p$ through the longitudinal relaxation is described. In a case where the Hamiltonian of the system coincides with $H_p$, the ground state of $H_p$ is obtained by this procedure. However, since there is an energy difference between 10> and 11> in many gate type quantum computers, the Hamiltonian of the system does not coincide with $H_p$, and the destination of a relaxation is 10> or |1>.

Therefore, we propose switching 10> and |1> sufficiently many times within a time $T_1$, where probabilities with which each of qubits stays at 10> and 11> are made 1:1 on average, and the energy difference between 10> and 11> is eliminated on average. Therefore, the Hamiltonian of the system can be made coincide with $H_p$ on average. Note that 1:1 is probabilistic, and it does not mean exact 1:1, and it includes an error determined based on a range of an operating condition as described in a third embodiment. For example, 1.01:0.99 and the like are included in the meaning of 1:1.

As other expressions of "|0> and |1>", "0 and 1", "a 0 state and a 1 state", "a lower level and an upper level", and the like are used.

In the present invention, a computational basis is set to the z axis. First, let us suppose an x-axis rotational gate $R_x$($\theta$). As is apparent from a Bloch sphere illustrated in FIG. 3, $R_x$($\theta$) switches 10> and 11> for each half rotation. When $R_x$($\theta$) continues to be applied, the longitudinal relaxation is canceled out on average, and a thick arrow (vector representing the state) points in the x-axis direction as illustrated in FIG. 3. That is, a solution to the problem Hamiltonian is obtained on average. Of course, this is average cancellation, and thus it does not become a pure state and the tip of the thick arrow is inside the Block sphere (mixed state).

Universal quantum computation can be implemented using $R_x$($\theta$), $R_y$($\theta$), and a two-qubit gate (any of CNOT, CZ, and VSWAP). As described above, $R_x$($\theta$) has a property of averaging |0> and |1>. Similarly, $R_y$($\theta$) also has a property of averaging 10> and |1>.

$R_2$($\theta$) can be converted to $R_y$($3\pi/2$)$R_x$($\theta$)$R_y$($\pi/2$), $R_y$($-\pi/2$)$R_x$($\theta$)$R_y$($-3\pi/2$), or the like, and thus $R_2$($\theta$) has a property of averaging 10> and |1>. In this case, the reason why $R_y$($3\pi/2$) of $R_y$($3\pi/2$)Rx($\theta$)$R_y$($\pi/2$) is not $R_y$($-\pi/2$) but $R_y$($3\pi/2$) is that the sum of rotational angles of $R_y$($3\pi/2$) and $R_y$($\pi/2$) equals $2\pi$. In a case where $R_y$($3\pi/2$)$R_x$($\theta$)$R_y$($\pi/2$) and $R_y$($-\pi/2$)$R_x$($\theta$)$R_y$($-3\pi/2$) are used in a 1:1 ratio, an effect of the relaxation during y-axis rotation can be canceled out. $R_x$($\theta$), $R_y$($\theta$), and $R_2$($\theta$) are given by the following Equations (5), using the matrix representation,

Equation 5

$$\text{(Equation 5)}$$

$$R_x(\theta) \equiv e^{-i\theta x/2} = \cos\frac{\theta}{2}I - i\sin\frac{\theta}{2}X = \begin{pmatrix} \cos\frac{\theta}{2} & -i\sin\frac{\theta}{2} \\ -i\sin\frac{\theta}{2} & \cos\frac{\theta}{2} \end{pmatrix}$$

$$R_y(\theta) \equiv e^{-i\theta y/2} = \cos\frac{\theta}{2}I - i\sin\frac{\theta}{2}Y = \begin{pmatrix} \cos\frac{\theta}{2} & -\sin\frac{\theta}{2} \\ \sin\frac{\theta}{2} & \cos\frac{\theta}{2} \end{pmatrix}$$

$$R_z(\theta) \equiv e^{-i\theta z/2} = \cos\frac{\theta}{2}I - i\sin\frac{\theta}{2}Z = \begin{pmatrix} e^{-i\theta/2} & 0 \\ 0 & e^{i\theta/2} \end{pmatrix}$$

A two-qubit gate provided by the interaction of $JX_1X_2$, $JY_1Y_2$, and $JZ_1Z_2$, and the like is equivalent even when bit flip is performed before and after the interaction using the circuit illustrated in FIG. 4A1. Therefore, let us perform the bit flip illustrated in FIG. 4A1 with a probability of 1/2; then, 10> and 11> are swapped with a probability of 1/2, achieving the averaging of |0> and |1>. CNOT, CZ, and VSWAP can be implemented with a combination of two-qubit gates such as $JX_1X_2$, $JY_1Y_2$, and $JZ_1Z_2$ and single qubit gates.

For example, let $H=J(X_1X_2+Y_1Y_2+Z_1Z_2-1)$; $\sqrt{SWAP}$ is achieved by setting $\theta=\pi/2$ in the unitary gate (Equation 6). Let $H=JZ_1Z_2$. The CZ gate is implemented as $CZ=\exp(-i\pi/4)R_{zz}(\pi/2)R_z^1(-\pi/2)R_z^2(-\pi/2)$ using (Equation 7).

Equation 6

$$U = \exp[-iHt/\hbar] = \exp[-i(H/2I)(2Jt/\hbar)] \equiv \exp[-i(H/2J)(\theta/2)] \quad \text{(Equation 6)}$$

Equation 7

$$U = \exp[-iH\delta t/\hbar] \equiv \exp[-iZ_1Z_2\theta/2] \equiv R_{zz}(\theta) \quad \text{(Equation 7)}$$

Here, $R_j^k$($\theta$) represents a j-axis rotation at an angle $\theta$ regarding a qubit k. The CNOT gate with a qubit 1 being a control and a qubit 2 being a target is implemented as $CNOT=R_y^2(\pi/2)CZR_y^2(-n/2)$.

The relationship illustrated in FIG. 4A1 is held based on the following (Formula 9). Let us collectively write Pauli spin matrices X, Y, and Z as $\sigma^i$(i=1, 2, 3). In a case where i≠j, $\sigma^i\sigma^j=i\varepsilon_{ijk}\sigma^k$(i≠k≠j). In a case where i=j , $\sigma^i\sigma^j=I$. Here, $\varepsilon_{123}=\varepsilon_{231}=\varepsilon_{312}=1$, $\varepsilon_{321}=\varepsilon_{213}=\varepsilon_{132}=-1$, and I is an identity operator. Therefore, in a case where i≠j, $\sigma^j\sigma^i\sigma^i=i\varepsilon_{ijk}\sigma^j\sigma^k=-\varepsilon_{ijk}\varepsilon_{ijk}\sigma^i=-\sigma^i$. In a case where i=j, $\sigma^j\sigma^i\sigma^i=\sigma^i$. A tensor product of $\sigma^i$($\sigma_1^i$) of the qubit 1 and $\sigma^i$($\sigma_2^i$) of the qubit 2, (Formula 8), is expressed as the following (Equation 9).

Equation 8

$$\left( \sigma_1{}^j \otimes \sigma_2{}^j \right) \qquad \text{(Equation 8)}$$

Equation 9

(Equation 9)

$$\left[ \left( \sigma_1^i \otimes I_2 \right)\left( I_1 \otimes \sigma_2^i \right) \right]\left( \sigma_1^j \otimes \sigma_2^j \right)\left[ \left( \sigma_1^i \otimes I_2 \right)\left( I_1 \otimes \sigma_2^i \right) \right] = \left( \sigma_1^j \otimes \sigma_2^j \right)$$

Thus, in a case where the interaction is expressed according to (Formula 10), the operation is equivalent even when bit flip or the like [not only the X operation (FIG. 4A1) but also the Y operation (FIG. 4A2) or Z operation] is performed before and after the interaction.

Equation 10

$$\left( \sigma_1{}^j \otimes \sigma_2{}^j \right) \qquad \text{(Equation 10)}$$

For example, a two-qubit gate implemented with a semiconductor qubit is based on the interaction of $H=J(X_1X_2 +Y_1Y_2+Z_1Z_2-1)$. Even in a case where bit flip or the like is performed before and after this two-qubit gate, the operation of the two-qubit gate does not vary based on (Equation 9).

The bit flip can be implemented with $R_x(\pi)$ or $R_x(-\pi)$. $R_x(\pm\pi)$ has the effect of directing a qubit in the $\pm x$ axis direction. To cancel out this effect, $R_x(\pm\pi)$ for bit flip is set to 1:1. The bit flip that is performed before and after the two-qubit gate may be performed using $R_y(\pm\pi)$ instead of $R_x(\pm\pi)$. In this case, the bit and phase flips are performed. These variants are illustrated in FIGS. 4B1 and 4B2. These variants are used probabilistically equally to cancel the unintended effect.

The current mainstream of superconducting qubits is a variable frequency type and a fixed frequency type. In the former type, the two-qubit interaction based on $H=J(X_1X_2+Y_1Y_2)$, $H=JZ_1Z_2$, and their superposition is obtainable. In this case also, the operation of the two-qubit gate does not vary even in a case where bit flip or the like is performed before and after the two-qubit gate based on (Equation 9).

In the latter fixed frequency type, a two-qubit interaction called cross-resonance is used. This is an interaction of $H=J(\cos\phi Z_1X_2+\sin\phi Z_1Y_2)$. First, a case where $\cos\phi=1$ is considered. In a case where bit flip is performed in accordance with (Equation 9), (Equation 11) is obtained and the sign is inverted.

Equation 11

$$\left[ (X_1 \otimes I_2)\,(I_1 \otimes X_2) \right]\,(Z_1 \otimes X_2)\,\left[ (X_1 \otimes I_2)\,(I_1 \otimes X_2) \right] = -\,(Z_1 \otimes X_2) \qquad \text{(Equation 11)}$$

In a case where $Y_1$ is used instead of $X_1$, (Equation 12) is obtained and the Hamiltonian is invariant. In addition, a combination of $X_1$ and $Y_2$ also may be used and (Equation 13) is obtained (FIG. 4A3).

Equation 12

$$\left[ (Y_1 \otimes I_2)\,(I_1 \otimes Y_2) \right]\,(Z_1 \otimes X_2)\,\left[ (Y_1 \otimes I_2)\,(I_1 \otimes Y_2) \right] = (Z_1 \otimes X_2) \qquad \text{(Equation 12)}$$

Equation 13

$$\left[ (X_1 \otimes I_2)\,(I_1 \otimes Y_2) \right]\,(Z_1 \otimes X_2)\,\left[ (X_1 \otimes I_2)\,(I_1 \otimes Y_2) \right] = (Z_1 \otimes X_2) \qquad \text{(Equation 13)}$$

In a case where the sign is inverted, it is necessary to take this into consideration to create an algorithm. Alternatively, a combination of gates in which the sign is not inverted also can be used. Examples of a circuit for the latter case are FIGS. 4B2 and 4B3. Here, $R_{\sigma\sigma}(\theta)$ in FIG. 4B2 is interpreted as $R_{zx}(\theta)$. The rotational gates in these drawings have the effect of making the qubit directed along the respective rotational axis; the effect can be cancelled by using those illustrated variants probabilistically equally. In a case where $\sin\phi=1$, the roles of $X_1$ and $Y_1$ are switched. That is, (Equation 14) is obtained (FIG. 4A4).

Equation 14

$$[(X_1 \otimes I_2)(I_1 \otimes X_2)](Z_1 \otimes Y_2)[(X_1 \otimes I_2)(I_1 \otimes X_2)] = (Z_1 \otimes Y_2), \ [(Y_1 \otimes I_2)(I_1 \otimes Y_2)](Z_1 \otimes Y_2)[(Y_1 \otimes I_2)(I_1 \otimes Y_2)] = -(Z_1 \otimes Y_2), \ [(Y_1 \otimes I_2)(I_1 \otimes X_2)](Z_1 \otimes Y_2)[(Y_1 \otimes I_2)(I_1 \otimes X_2)] = (Z_1 \otimes Y_2)$$

(Equation 14)

Examples of a combination of gates in which the sign is not inverted are FIGS. 4B1 and 4B4. In this case, $R_{\sigma\sigma}(\theta)$ in FIGS. 4B1 is interpreted as $R_{zy}(\theta)$. The rotational gates in these drawings have the effect of making the qubit directed along the respective rotational axis. The effect can be cancelled by using those illustrated variants probabilistically equally.

In the present invention, the "probability of 1/2" and the term "probabilistically equally" are literally probabilistic and do not mean exact "1/2" and "equally".

Third Embodiment

FIG. 5 summarizes the prevent invention described in the first and second embodiments. A quantum computing device 100 (see FIG. 10) of a quantum computer includes at least a qubit unit (qubit system) 502 that maintains and computes quantum information, a measurement unit (measurement system) 503 that measures a result computed at the qubit unit 502, and a control unit (control system) 501 that controls the qubit unit 502 and the measurement unit 503. The qubit unit 502 and the measurement unit 503 operate through an interaction with the control unit 501.

As described in the first embodiment, in the relaxation quantum computing, $\delta t > T_1$ and $\delta t > T_2$ are set, and the state is relaxed to the ground state during each time $\delta t$. Therefore, in terms of the total computation time for n steps, $n\delta t > T_1$, and $n\delta t > T_2$.

As one method of making each of the qubits stay at $|0>$ and $|1>$ with the probabilities of 1:1 on average, we use the property that the x-axis rotational gate and the y-axis rotational gate make the qubits oscillate between $|0>$ and $|1>$. To fully utilize this property, the sum of the absolute values of the angles rotated with the rotational gates within the times $T_1$ and $T_2$ is made sufficiently larger than $2\pi$. That is, $\Sigma_j|\theta_{xj}^k|>>2\pi$ and $\Sigma_j|\theta_{yj}^k|>>2\pi$. Here, j is a subscript that distinguishes the rotational gates in the time axis, and k is a subscript that distinguishes the qubits. In addition, the rotational angles are evaluated using the absolute values because $\theta_{xj}^k$ and $\theta_{yj}^k$ can take both $\pm$, and thus in a case where the rotational angles are simply summed, the rotational angles may cancel each other out and there are cases of $\Sigma_j\theta_{xj}^k \sim 1$ or 0 and $\Sigma_j\theta_{yj}^k \sim 1$ or 0.

As can be understood from the condition given by inequalities $\Sigma_j|\theta_{xj}^k|>>2\pi$ and $\Sigma_j|\theta_{yj}^k|>>2\pi$, 1:1 in the present invention is probabilistic and includes an error determined by the range satisfying the inequalities. This does not mean exact 1:1.

Regarding the two-qubit gate, as described in the second embodiment, bit flip or bit and phase flips is or are performed with a probability of 1/2 before and after the two-qubit gate.

Fourth Embodiment

As described in the third embodiment, in the present invention, by setting $\Sigma_j|\theta_{xj}^k|>>2\pi$ and $\Sigma_j|\theta_{yj}^k|>>2\pi$, each of the qubits are made stay at $|0>$ and $|1>$ with the probabilities of 1:1 on average. FIG. 6 illustrates this from the perspective of an energy diagram.

Let the energy difference between $|0>$ and $|1>$ be (Formula 15). The x-axis rotational gate and the y-axis rotational gate are implemented by applying microwaves (Formula 17) that resonate with (Formula 16). Due to this resonance, the state oscillates between $|0>$ and $|1>$. This is referred to as Rabi oscillation. In a case where the Rabi oscillation is expressed using an energy diagram, $|0>$ and $|1>$ are separated by the energy difference expressed by (Formula 18). The above-described state is illustrated on the left side of FIG. 6.

Equation 15

$$\hbar\omega_0$$

(Equation 15)

Equation 16

$$\hbar\omega_0 \qquad \text{(Equation 16)}$$

Equation 17

$$\hbar\omega_{rf} \qquad \text{(Equation 17)}$$

Equation 18

$$\hbar\omega_{rabi} \qquad \text{(Equation 18)}$$

In the present invention, by making the situation that each of the qubits stay at 10> and 11> with the probabilities of 1:1 on average, the energy difference between 10> and 11> is eliminated in a pseudo manner. The right side of FIG. 6 illustrates it. The ground state of this pseudo energy diagram corresponds to the ground state of the problem Hamiltonian $H_p$, and longitudinal relaxation leads to the ground state of this system.

FIGS. 7 illustrate examples of the relaxation that is simulated under the x-axis rotational gate applied. $T_1=T_2$ was assumed. An initial value is set to a complete mixed state (($|0><0|+|1><1|$)/2: classical complete mixing of |0> and 11»). The polarization of $<X>=tr\{X\rho\}=0$ at t=0 becomes $tr\{X\rho\}>0$ with the passage of time. $tr\{X\rho\}=0$ corresponds to the origin in FIG. 3, and $tr\{X\rho\}>0$ corresponds to the state indicated by the thick arrow in FIG. 3. As is apparent from comparison of FIG. 7A with FIG. 7B, the larger $f_{rabi}=\omega_{rabi}/2\pi$, the larger the magnitude of the polarization. In the simulation, the fourth-order Runge-Kutta method was used. In FIGS. 7, h is a time interval. h is set to a sufficiently small value such that there is not significant difference when h is replaced with 2h. Here, $f_0=w_0/2\pi$, and $f_{rf}=\omega_{rf}/2\pi$.

Fifth Embodiment

The ground state of the problem Hamiltonian $H_p$ is obtained in a pseudo manner through the procedure up to the fourth embodiment. In a fifth embodiment, measurement for extracting necessary information and processing of measurement results are described.

For example, let us pay attention to a qubit and let us assume that the solution is $|\psi>=a|0>+b|1>$. By repeating the process of obtaining the ground state of $H_p$ and the Z measurement, the probability distributions Pr{|0>} and Pr{|1>] corresponding to $|a|^2$ and $|b|^2$ are obtained. As a result, it becomes possible to determine |a|>|b|, |a|<|b|, and |a|=|b| (FIG. 8A).

Let us suppose problems that $|a|^2$ and $|b|^2$ are to be determined. The procedure is that a large number of problems for which solutions are known in advance are prepared, training data are generated by repeating computation and Z measurement, functions $f_a$ and $f_b$ that infer $|a|^2$ and $|b|^2$ from measured values are determined by machine learning, and $|a|^2$ and $|b|^2$ are determined from Pr{|0>} and Pr{|1>} of real problems (FIG. 8B). In machine learning, it is also possible to infer a and b including the phase (FIG. 8C).

Let us assume that a measured quantity is X. In this case, the measurement bases are the eigenvectors of X, $|+>=(|0>+|1>)/\sqrt{2}$ and $|->=|0>-|1>)/\sqrt{2}$ (X measurement). The X measurement is performed in such a way that $|\psi>$ is transformed into H$|\psi>$ using the Hadamard gate H and the Z measurement is performed, or that $|\psi>$ is transformed into $R_y(-\pi/2)|\psi>$ using the y-axis rotational gate and performs the Z measurement. H can be implemented as $H=iR_x(\pi)R_y(\pi/2)$. Let us assume that the solution is $|\psi>=c|+>+d|->$. When the X measurement is performed instead of the Z measurement, information regarding c and d is obtained in a similar manner to a case of $|\psi>=a|0>+b|1>$. In a case where the measured quantity is Y, similarly, the measurement is performed using the eigenvectors of Y, $|+i>=(|0>+i|1>)/x/2$ and $|-i>=(i|0>+|1>)/\sqrt{2}$, as the bases (Y measurement). In the Y measurement, $|\psi>$ is transformed into $R_x(\pi/2)|\psi>$ and the Z measurement is performed.

In a case where an answer is classical like a combinatorial optimization problem (in the case of an ising spin Hamiltonian), the measurement result can be more simply treated. In this case, since the solution is |0> or 11>, a candidate for the solution can be obtained by one measurement. When computation and measurement are repeatedly performed, a plurality of candidates for the solution can be obtained (FIG. 8D).

Sixth Embodiment

As is apparent from the fifth embodiment, in the present invention, the linear superposition state $|\psi\rangle=a|0\rangle+b|1\rangle$ can be used as the final solution. That is, a quantum mechanical problem can be treated. However, as can be understood from the fact that the tip of the thick arrow illustrated in FIG. 3 is not present on the surface of the Bloch sphere, the obtained state is not a pure state but a mixed state. In the fifth embodiment, machine learning is used to infer a result of the pure state from a result of the mixed state.

The quantum entanglement, which is another important property of the quantum states, is sensitive to purity. Favorable quantum entanglement cannot be formed from mixed states being entangled with each other. Then, it is effective to initialize one of the qubits to a state of $|0\rangle$, $|1\rangle$, or a linear superposition of $|0\rangle$ and $|1\rangle$. Since $|0\rangle$ and $|1\rangle$ are pure states, quality-improved quantum entanglement is formed (FIG. 9).

Seventh Embodiment

FIG. 10 pertaining to the seventh embodiment illustrates an example of a configuration of a computer including the quantum computing device 100. The configuration illustrated in FIG. 10 is similar to that of an ordinary computer. The difference is that the computer includes the quantum computing device 100 (see FIG. 5). The quantum computing device 100 specializes in performing quantum mechanical computation, and other general computation is performed with a general computing device 202.

The above-described configuration may be configured as an integrated computer, or another computer in which any parts of a main storage device 201, a general computing device 202, a control device 203, an auxiliary storage device 204, an input device 205, an output device 206, and the like are connected to each other via a network.

General computation is performed in a similar procedure to that of an ordinary computer. The main storage device 201 that is a storage unit and the general computing device 202 that is a computing unit communicate data with each other and repeat the communication to make computation proceed. Here, the control device 203 controls the overall process. A program to be executed by the general computing device 202 is stored in the main storage device 201 that is the storage unit. When the main storage device 201 does not have a sufficient storage capacity, the auxiliary storage device 204, which is also a storage unit, is used. The input device 205 is used to input data, a program, and the like, and the output device 206 is used to output a result. The input device 205 includes a manual input device such as a keyboard and an interface connected to the network. In addition, this interface also serves as an output device.

The quantum computation is performed in a similar procedure. The main storage device 201 that is the storage unit and the quantum computing device 100 that is a computing unit communicate data with each other and repeat the communication to make computation proceed. Here, the control device 203 controls the overall process. A program to be executed by the quantum computing device 100 is stored in the main storage device 201 that is the storage unit.

The general computing device 202 is used to translate the program into a code to be used by the quantum computing device 100, and is stored in the main storage device 201. The coded program is transmitted from the main storage device 201 to the quantum computing device 100. The control device 203 transmits a control signal to the quantum computing device 100 and executes computation in accordance with the coded program. A result of the execution by the quantum computing device 100 is transmitted to the main storage device 201 and is post-processed by the general computing device 202 as necessary.

In the above-described embodiments, each of the qubits is made stay at $|0\rangle$ and $|1\rangle$ with the probabilities of 1:1 on average and the effect of relaxing to $|0\rangle$ or $|1\rangle$ is cancelled on average during the computation. An x-axis rotational gate $R_x(\theta_{xj})$ and a y-axis rotational gate $R_y(\theta_{yj})$ make a qubit oscillate between $|0\rangle$ and $|1\rangle$. By using this property and the conditions of $\Sigma_j|\theta_{xj}|>>2\pi$ and $\Sigma_j|\theta_{yj}|>>2\pi$, the probabilities with which each of the qubits stays at $|0\rangle$ and $|1\rangle$ are made 1:1 on average, where $\Sigma_j$ is the sum of the absolute values of the rotational angles of $R_x(\theta_{xj})$ and $R_y(\theta_{yj})$ applied within the longitudinal relaxation time $T_1$ and the transverse relaxation time $T_2$.

In addition, regarding two-qubit computation $R_J(\theta_{Jj})$, bit flip is performed with a probability of 1/2 before and after the operation; thus the roles of $|0\rangle$ and $|1\rangle$ are made symmetric. The computation time $n\delta t$ is set to $n\delta t > T_1$ and $n\delta t > T_2$; the system is relaxed to a pseudo state where relaxation to $|0\rangle$ and $|1\rangle$ is averaged. In a ground state search problem, the longitudinal relaxation to the ground state means automatic error correction, and thus a real-world issue can be treated in an NISQ computer.

As described above, in the embodiments, the probabilities with which each of the qubits stays at $|0\rangle$ and $|1\rangle$ are made 1:1 on average and the effect of relaxation to $|0\rangle$ and $|1\rangle$ is cancelled on average during the computation. When the x-axis rotational gate $R_x(\theta_{xj})$ continues to be applied, $|0\rangle$ and $|1\rangle$ are periodically swapped. By using this property and the conditions of $\Sigma_j|\theta_{xj}|>>2\pi$ regarding $R_x(\theta_{xj})$ applied within the longitudinal relaxation time $T_1$ and the transverse relaxation time $T_2$, the probabilities with which each of the qubits stays at $|0\rangle$ and $|1\rangle$ are made 1:1 on average. The same applies to the y-axis rotational gate $R_y(\theta_{yj})$. As for the two-qubit computation $R_J(\theta_{Jj})$, bit flips are performed with a probability of 1/2 before and after the operation, and thereby the roles of $|0\rangle$ and $|1\rangle$ are made symmetric.

By these processes, the probabilities with which each of the qubits stays at |0> and 11> are made 1:1 on average, where the computation time $n\delta t$ is set to $n\delta t > T_1$ and $n\delta t > T_2$. That is, the effect of the relaxation to 10> or |1> is cancelled on average; in addition, computation time $n\delta t$ is set sufficiently long. Thus, the state is made longitudinally relaxed to the ground state of the problem Hamiltonian.

Since the ground state corresponds to a correct answer and the excited state corresponds to a state with an error, the longitudinal relaxation to the ground state automatically implements error correction. That is, it is not necessary to implement quantum error correction, and a real-world issue can be treated with a NISQ computer. In addition, since the final solution for each qubit can be a linear superposition state of $a|0>+b|1>$, quantum mechanical problems can be treated.

According to the above-described embodiments, it is possible to implement the gate type quantum computer that is robust against longitudinal relaxation between |0> and |1> even when they have an energy difference.

Reference Signs List

100:  quantum computing device
101:  loop of computation and measurement
501:  control unit
502:  qubit unit
503:  measurement unit

**Claims**

1. A quantum computer comprising:

   a qubit unit that maintains and computes quantum information in which a plurality of qubits is arrayed;
   a measurement unit that measures a result computed with the qubit unit; and
   a control unit that controls the qubit unit and the measurement unit, wherein
   the control unit controls the qubits such that probabilities with which each of the qubits stays at 10> and 11> are made 1:1 on average during the computation in the qubit unit.

2. The quantum computer according to claim 1, wherein the control unit performs control such that the probabilities with which each of the qubits stays at the |0> and the |1> are made 1:1 on average during the computation, a state of the qubit unit is relaxed to the state corresponding to the ground state of a problem Hamiltonian on average, and thereby a solution is obtained through the relaxation.

3. The quantum computer according to claim 1, wherein the control unit performs control such that a computation time is equal to or longer than a longitudinal relaxation time $T_1$ and a transverse relaxation time $T_2$ of the qubit unit.

4. The quantum computer according to claim 3, wherein

   the control unit controls the qubits by performing x-axis rotational gate operations and y-axis rotational gate operations in the qubit unit,
   the control unit performs control such that the sum of the absolute values of the angles rotated with all the x-axis rotational gates performed for each of the qubits is larger than $2\pi$, and that the sum of the absolute values of the angles rotated with all the y-axis rotational gates performed for each of the qubits is larger than $2\pi$, within the longitudinal relaxation time $T_1$ and the transverse relaxation time $T_2$.

5. The quantum computer according to claim 1, wherein
   let $R_x(\theta)$ be an x-axis rotational gate for the qubits with an x-axis rotational angle $\theta$, let $R_y(\theta)$ be a y-axis rotational gate with a y-axis rotational angle $\theta$, and let $R_z(\theta)$ be a z-axis rotational gate with a z-axis rotational angle $\theta$,

$$R_y(3\pi/2)R_x(\theta)R_y(\pi/2) \quad \text{or} \quad R_y(-\pi/2)R_x(\theta)R_y(-3\pi/2)$$

   is performed with a probability of 1/2 as the $R_z(\theta)$ through the control of the control unit.

6. The quantum computer according to claim 3, wherein,

the control unit
performs the control to gradually change a problem Hamiltonian at a cycle of time $\delta t$,
sets the time $\delta t$ to be longer than the longitudinal relaxation time $T_1$ and the transverse relaxation time $T_2$, and
relaxes a state of the qubit unit at the cycle of time $\delta t$.

7. The quantum computer according to claim 1, wherein,

the control unit performs control such that:
regarding a two-qubit gate performed for each of the qubits, bit flip or bit and phase flips is or are performed with a probability of 1/2 in advance; and
the bit flip or the bit and phase flips is or are performed again after the two-qubit gate was performed when the bit flip or the bit and phase flips was or were performed.

8. The quantum computer according to claim 1, wherein, the qubit unit and the measurement unit repeatedly perform the computation and the measurement to obtain a probability distribution of measured values.

9. The quantum computer according to claim 8, wherein,

the qubit unit and the measurement unit repeatedly perform the computation and the measurement to obtain the probability distribution of the measured values for problems whose answers are known,
the quantum computer determines a function that infers an answer from the probability distribution of the measured values by machine learning,
obtains the probability distribution of the measured values by repeatedly performing the computation and the measurement for a problem whose answer is unknown, and uses the function to obtain the answer of the problem whose answer is unknown.

10. The quantum computer according to claim 1, wherein

to form quantum entanglement where the |0> and 11> are used as bases,
the control unit initializes a state of one of the qubits to the |0>, the |1>, or a linear superposition state of the 10> and the |1>.

11. A quantum computer comprising:

a qubit unit that maintains and computes quantum information in which a plurality of qubits is arrayed;
a measurement unit that measures a result computed with the qubit unit; and
a control unit that controls the qubit unit and the measurement unit, wherein
operations of x-axis rotational gates, y-axis rotational gates, and a two-qubit gates can be performed in the qubit unit through control from the control unit,
in a case where the qubits are described with the bases of |0> and |1>, the energy of 10> is different from that of 11> regarding each of the qubits,
the control unit performs control such that a computation time is equal to or longer than a longitudinal relaxation time $T_1$ and a transverse relaxation time $T_2$ of the qubit unit, the control unit performs control such that the sum of the absolute values of the angles rotated with all the x-axis rotational gates performed for each of the qubits is larger than $2\pi$ and the sum of the absolute values of the angles rotated with all the y-axis rotational gates performed for each of the qubits is larger than $2\pi$, within the longitudinal relaxation time $T_1$ and the transverse relaxation time $T_2$,
the control unit performs control such that bit flip or bit and phase flips is or are performed with a probability of 1/2 in advance regarding the two-qubit gate performed for each of the qubits, and
the control unit performs control such that the bit flip or the bit and phase flips is or are performed again after the two-qubit gate was performed when the bit flip or the bit and phase flips was or were performed.

12. A method for controlling a quantum computer that measures a result computed with a qubit unit that maintains and computes quantum information in which a plurality of qubits is arrayed, and in which operations of x-axis rotational gates, y-axis rotational gates, and a two-qubit gates can be performed, and in a case where the qubits are described with the bases of |0> and |1>, the energy of the 10> is different from that of the 11> regarding each of the qubits, the method comprising:

performing control such that a computation time is equal to or longer than a longitudinal relaxation time $T_1$ and a transverse relaxation time $T_2$ of the qubit unit;

performing control such that the sum of the absolute values of the angles rotated with all the x-axis rotational gates performed for each of the qubits is larger than $2\pi$ and the sum of the absolute values of the angles rotated with all the y-axis rotational gates performed for each of the qubits is larger than $2\pi$, within the longitudinal relaxation time $T_1$ and the transverse relaxation time $T_2$;

performing control such that bit flip or bit and phase flips is or are performed with a probability of 1/2 in advance regarding the two-qubit gate performed for each of the qubits; and

performing control such that the bit flip or the bit and phase flips is or are performed again after the two-qubit gate was performed when the bit flip or the bit and phase flips was or were performed.

13. The method for controlling the quantum computer according to claim 12, wherein

by performing the control such that the sum of the absolute values of the angles rotated with all the x-axis rotational gates performed for each of the qubits is larger than $2\pi$ and the sum of the absolute values of the angles rotated with all the y-axis rotational gates performed for each of the qubits is larger than $2\pi$ within the longitudinal relaxation time $T_1$ and the transverse relaxation time $T_2$,

each of the qubits in the qubit unit is controlled such that probabilities with which each of the qubits stays at the |0> and the |1> are made 1:1 on average during the operation.

14. The method for controlling the quantum computer according to claim 12, wherein
let $R_x(\theta)$ be an x-axis rotational gate for the qubits with an x-axis rotational angle $\theta$, let $R_y(\theta)$ be a y-axis rotational gate with a y-axis rotational angle $\theta$, and let $R_2(\theta)$ be a z-axis rotational gate with a z-axis rotational angle $\theta$,

$$R_y(3\pi/2)R_x(\theta)R_y(\pi/2) \quad \text{or} \quad R_y(-\pi/2)R_x(\theta)R_y(-3\pi/2)$$

is performed with a probability of 1/2 as the $R_z(\theta)$.

15. The method for controlling the quantum computer according to claim 12, further comprising:

gradually changing a problem Hamiltonian at a cycle of time $\delta t$;
setting the time $\delta t$ to be longer than the longitudinal relaxation time $T_1$ and the transverse relaxation time $T_2$; and
relaxing a state of the qubit unit at a cycle of time $\delta t$.

# FIG. 1

$$e^{-iH(t_1)\delta t_1} \quad e^{-iH(t_2)\delta t_2} \quad \cdots \quad e^{-iH(t_n)\delta t_n}$$

INPUT

$\rho(t_0) =$
$(|+\rangle\langle+|)^{\otimes m}$

$\underline{H(t_0)}$    $\underline{H(t_1)}$    $\underline{H(t_2)}$    $\underline{H(t_n)}$

OUTPUT

$\rho(t_n)$

# FIG. 2

$R_z^1(\theta_{z1}1)$   $R_x^1(\theta_{x1}1)$   $R_j^{12}(\theta_{j}12)$   $R_z^1(\theta_{z2}1)$

$R_x^2(\theta_{x1}2)$   $R_z^2(\theta_{z1}2)$   $R_j^{23}(\theta_{j}23)$

$R_y^3(\theta_{y1}3)$   $R_z^3(\theta_{z1}3)$

$\cdots$

$m$

# FIG. 3

RELAXATION
DESTINATION

# FIG. 4A1

# FIG. 4A2

# FIG. 4A3

# FIG. 4A4

# FIG. 4B1

# FIG. 4B2

$R_y{}^1(\pi)$ — $R_{\sigma\sigma}(\theta)$ — $R_y{}^1(-\pi)$

$R_y{}^2(\pi)$ — $R_{\sigma\sigma}(\theta)$ — $R_y{}^2(-\pi)$

$R_y{}^1(-\pi)$ — $R_{\sigma\sigma}(\theta)$ — $R_y{}^1(\pi)$

$R_y{}^2(-\pi)$ — $R_{\sigma\sigma}(\theta)$ — $R_y{}^2(\pi)$

$R_y{}^1(\pi)$ — $R_{\sigma\sigma}(\theta)$ — $R_y{}^1(-\pi)$

$R_y{}^2(-\pi)$ — $R_{\sigma\sigma}(\theta)$ — $R_y{}^2(\pi)$

$R_y{}^1(-\pi)$ — $R_{\sigma\sigma}(\theta)$ — $R_y{}^1(\pi)$

$R_y{}^2(\pi)$ — $R_{\sigma\sigma}(\theta)$ — $R_y{}^2(-\pi)$

# FIG. 4B3

$R_x{}^1(\pi)$ — $R_{zx}(\theta)$ — $R_x{}^1(-\pi)$

$R_y{}^2(\pi)$ — $R_{zx}(\theta)$ — $R_y{}^2(-\pi)$

$R_x{}^1(-\pi)$ — $R_{zx}(\theta)$ — $R_x{}^1(\pi)$

$R_y{}^2(-\pi)$ — $R_{zx}(\theta)$ — $R_y{}^2(\pi)$

$R_x{}^1(\pi)$ — $R_{zx}(\theta)$ — $R_x{}^1(-\pi)$

$R_y{}^2(-\pi)$ — $R_{zx}(\theta)$ — $R_y{}^2(\pi)$

$R_x{}^1(-\pi)$ — $R_{zx}(\theta)$ — $R_x{}^1(\pi)$

$R_y{}^2(\pi)$ — $R_{zx}(\theta)$ — $R_y{}^2(-\pi)$

# FIG. 4B4

$R_y^1(\pi)$ — $R_{zy}(\theta)$ — $R_y^1(-\pi)$

$R_x^2(\pi)$ — $R_{zy}(\theta)$ — $R_x^2(-\pi)$

$R_y^1(-\pi)$ — $R_{zy}(\theta)$ — $R_y^1(\pi)$

$R_x^2(-\pi)$ — $R_{zy}(\theta)$ — $R_x^2(\pi)$

$R_y^1(\pi)$ — $R_{zy}(\theta)$ — $R_y^1(-\pi)$

$R_x^2(-\pi)$ — $R_{zy}(\theta)$ — $R_x^2(\pi)$

$R_y^1(-\pi)$ — $R_{zy}(\theta)$ — $R_y^1(\pi)$

$R_x^2(\pi)$ — $R_{zy}(\theta)$ — $R_x^2(-\pi)$

# FIG. 5

100

501 CONTROL UNIT

$R_x^k(\theta_{xj}^k)$
$R_y^k(\theta_{yj}^k)$
$R_J^{kl}(\theta_{Jj}^{kl})$

502 QUBIT UNIT

MEASUREMENT UNIT

503

COMPUTATION TIME $>$ T$_1$, T$_2$

WITHIN T$_1$, T$_2$

$\sum_j |\theta_{xj}^k| \gg 2\pi$

$\sum_j |\theta_{yj}^k| \gg 2\pi$

WITH PROBABILITY OF 1/2

$R_J^{kl}(\theta_{Jj}^{kl})$

$\rightarrow X_k X_l R_J^{kl} \theta_{Jj}^{kl}) X_k X_l$, ETC.

# FIG. 6

$\hbar\omega_{rabi}$

$|1\rangle$

$\hbar\omega_0$
$=\hbar\omega_{rf}$

$|0\rangle$

ENERGY DIAGRAM OF
REAL SYSTEM

PSEUDO ENERGY DIAGRAM
ACCORDING TO PRESENT
INVENTION

# FIG. 7A

(a)

$f_0 = 1$   $h = 0.00025$

$f_{rf} = 1$   $T_1 = 1000$

$f_{rabi} = 0.1$

$10^{-1}$

$10^{-2}$

$\mathrm{tr}[X\rho]$

$t\,/\,T_1$

## FIG. 7B

(b)

$f_0 = 1$        $h = 0.00025$

$f_{rf} = 1$        $T_1 = 1000$

$f_{rabi} = 0.01$

## FIG. 8A

# FIG. 8B

PROBLEM

↓

REPEAT

COMPUTATION

↓

MEASUREMENT

↓

MEASUREMENT RESULT

$a_t$ and $b_t$
KNOWN PROBLEMS

↓

101 IN FIG. 8A

↓

$Pr\{|0\rangle\}, Pr\{|1\rangle\}$

· · ·

↓

MACHINE LEARNING

↓

$Pr\{|0\rangle\}, Pr\{|1\rangle\}$

$|a_t|^2 = f_a(Pr\{|0\rangle\}, Pr\{|1\rangle\}), |b_t|^2 = f_b(Pr\{|0\rangle\}, Pr\{|1\rangle\})$

↓

$|a|^2, |b|^2$

$f_a, f_b$

# FIG. 8C

PROBLEM

↓

REPEAT

COMPUTATION

↓

MEASUREMENT

↓

MEASUREMENT RESULT

$a_t$ and $b_t$
KNOWN PROBLEMS

↓

101 IN FIG. 8A

↓

$Pr\{|0\rangle\}, Pr\{|1\rangle\}$

· · ·

↓

MACHINE LEARNING

↓

$Pr\{|0\rangle\}, Pr\{|1\rangle\}$

$a_t = f_a(Pr\{|0\rangle\}, Pr\{|1\rangle\}), b_t = f_b(Pr\{|0\rangle\}, Pr\{|1\rangle\})$

↓

$a, b$

$f_a, f_b$

# FIG. 8D

PROBLEM

↓

| COMPUTATION |

↓

| MEASUREMENT |

↓

$|0\rangle$ or $|1\rangle$

# FIG. 9

$\rho_1$ — [ $R_J(\theta)$ ] — QUBIT 1

$|0\rangle$ — [ $R_J(\theta)$ ] — QUBIT 2

$$\begin{bmatrix} |1\rangle \\ a|0\rangle + b|1\rangle \end{bmatrix}$$

# FIG. 10

<table>
<tr><td colspan="2" align="center">**INTERNATIONAL SEARCH REPORT**</td><td>International application No.<br><br>**PCT/JP2022/001056**</td></tr>
</table>

**A. CLASSIFICATION OF SUBJECT MATTER**

**G06N 10/00**(2022.01)i
FI: G06N10/00

According to International Patent Classification (IPC) or to both national classification and IPC

**B. FIELDS SEARCHED**

Minimum documentation searched (classification system followed by classification symbols)

G06N10/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | HEN, Itay. Quantum gates with controlled adiabatic evolutions. PHYSICAL REVIEW A, 12 February 2015, vol. 91, Iss.2<br>entire text, all drawings | 1-15 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **24 March 2022** | **05 April 2022** |

| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br>Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A.ASPURU-GUZIK** ; **A.D.DUTOI** ; **P.J.LOVE** ; **HEAD-GORDON1**. SimulatedQuantum Computation of Molecular Energies. *Science*, 2005, vol. 309, 1704

- **A.M.CHILDS** ; **E.FARHI** ; **J.PRESKILL**. Robustness of adiabatic quantum computation. *Phys.Rev.A*, 2002, vol. 65, 012322